# EUROPÄISCHE PATENTSCHRIFT

(11) **EP 2 255 959 B1**
(45) Veröffentlichungstag und Bekanntmachung des Hinweises auf die Patenterteilung: **25.06.2014**
(21) Anmeldenummer: 09177433.1
(22) Anmeldetag: 30.11.2009
(51) Int. Cl.: B29D 30/66, B05C 3/02, B05C 3/08, B05C 3/10, B60C 11/16

(54) **Verfahren zum Verankern von Spikes im Laufstreifen eines Fahrzeugluftreifens**
Method for anchoring spikes in the tread of a pneumatic tyre for vehicles
Procédé d'ancrage de crampons dans la bande de roulement d'un pneu pour véhicule

(30) Priorität: 27.05.2009 DE 102009025874
(43) Veröffentlichungstag der Anmeldung: 01.12.2010
(73) Patentinhaber: Continental Reifen Deutschland GmbH, 30165 Hannover (DE)
(72) Erfinder: Kendziorra, Norbert, Dr., 30827 Garbsen (DE); Schlittenhard, Jan, 30900 Wedemark (DE); Kötter, Maik, 49733 Haren (Ems) (DE)
(74) Vertreter: Finger, Karsten

(56) Entgegenhaltungen:
- EP-A1- 1 055 509
- CA-A1- 1 044 961
- CH-A5- 671 271
- DE-A1- 1 579 111
- DE-A1-102004 039 755
- GB-A- 968 003
- GB-A- 1 096 749
- GB-A- 190 704 069
- JP-A- 7 001 605
- JP-A- 58 051 134
- JP-A- 2008 207 743
- RU-C1- 2 106 262
- SU-A1- 1 669 770
- US-A- 3 407 860
- US-A- 3 476 166
- US-A- 3 911 986
- US-A- 4 128 446
- US-A- 4 844 137

## Beschreibung

Die Erfindung betrifft ein Verfahren zum Verankern von Spikes in einem Laufstreifen eines Fahrzeugluftreifens, wobei die Spikes jeweils einen Basisteil, einen Spikekörper und einen Pin aufweisen und in Spikelöcher im Laufstreifen eingebracht werden, welche bei der Vulkanisation des Reifens in einer Heizpresse eingeformt worden sind, wobei die Spikes vor dem Einbringen in den Laufstreifen mit einem Haftsystem beschichtet werden und unter Pressung des Gummimaterials in die Spikelöcher eingebracht werden, wobei anschließend das Haftsystem bei in den Spikelöchern positionierten Spikes durch Wärme aktiviert wird, sodass eine Haftverbindung der Spikes zum Gummimaterial des Laufstreifens hergestellt wird. Die Erfindung betrifft ferner eine Vorrichtung zur Aktivierung des Haftsystems von Spikes.

Spikes werden üblicherweise durch eine Kombination aus Formschluss und Klemmung in den Spikelöchern des Laufstreifens von Fahrzeugluftreifen gehalten und weisen einen Spikekörper aus Metall, insbesondere Stahl, oder aus Kunststoff, auf, in welchem der über die Laufstreifenoberfläche vorstehende Spikepin, welcher insbesondere aus einem Hartmetall besteht, gehalten ist. Spikelöcher und Spikekörper sind geometrisch derart ausgelegt, dass die Pressung des Laufstreifengummis die Spikes an einem unerwünschten Verlassen des Laufstreifens weitgehend hindert.

Ein Verfahren der eingangs genannten Art ist beispielsweise aus der JP 7001605 A und der GB 968003 A bekannt. Aus der JP 2008-207743 A ist ein Verfahren bekannt, bei dem die Spikes nicht mit einem Haftsystem beschichtet werden, sondern in eine speziell harte Gummimischung eingebracht werden, wobei durch ein Erhitzen der Spikes eine gute Verbindung mit diesem Gummimaterial erzielt werden soll. Das Erhitzen der Spikes erfolgt berührungslos durch elektromagnetische Induktion.

Aus der DE 600 08 625 T2 ist ein Verfahren zur Herstellung eines Fahrzeugluftreifens mit Spikes bekannt, bei welchem die Spikes in der Vulkanisierform des Reifens an speziell vorgesehenen Sitzen eingesetzt sind, der Rohreifen in die Form eingebracht wird und nach dem Schließen der Form der Rohreifen vulkanisiert wird. Dabei werden die Spikes in der Form durch Magneten derart gehalten, dass die erzeugte Magnetkraft in der Lage ist, jeden Spike in seiner vorher festgelegten Position während des Ausformens des Reifens zu fixieren, insbesondere auch während des Einschließens der Spikes in das Laufstreifenmaterial. Die von den in der Form vorhandenen Magneten auf die Spikes ausgeübte Kraft darf jedoch ein Herausziehen des vulkanisierten Reifens aus der Form nicht behindern. Vor ihrem Einsetzen in die Vulkanisationsform werden die Spikes entweder mit einem Haftsystem behandelt oder mit einer Schicht aus einem Haftsystem versehen, wodurch die Haltekraft der Spikes im Laufstreifen erhöht wird. Dieses bekannte Verfahren ist jedoch technisch sehr aufwändig und kostenintensiv.

Bei den herkömmlichen, lediglich durch Formschluss und Pressung des Gummis im Laufstreifen gehaltenen Spikes besteht nach wie vor die Gefahr, dass die Spikes bei hohen Belastungen, wie sie bei bestimmten Bremsmanövern oder schneller Kurvenfahrt auftreten können, verloren gehen.

Der Erfindung liegt somit die Aufgabe zugrunde, ein Verfahren gemäß Anspruch 1 zur Verfügung zu stellen, welches eine weitgehend belastungsresistente Einbindung von Spikes im Laufstreifen von bereits vulkanisierten Reifen ermöglicht, sodass die Gefahr des Spikeverlustes unter hohen Belastungen reduziert ist. Darüber hinaus soll es die Erfindung ermöglichen, die dem Laufstreifen zu Grunde liegende(n) Kautschukmischung(en) derart auslegen zu können, dass die Wintereigenschaften des Laufstreifens verbessert werden können, ohne auf die für einen guten Presssitz der Spikes in den Spikelöchern erforderlichen Eigenschaften des Laufstreifens zu sehr Rücksicht nehmen zu müssen.

Gelöst wird die gestellte Aufgabe erfindungsgemäß dadurch, dass das auf die Spikes aufgebrachte Haftsystem durch Induktionsheizen der Spikes aktiviert wird, wobei jeder Spike mit einer separaten Induktionsheizreinrichtung erhitzt wird. Vorteilhafte Ausgestaltungen der Erfindung sind Gegenstand der Unteransprüche.

Beim erfindungsgemäßen Verfahren werden die mit einem Haftsystem beschichteten Spikes auf herkömmliche Weise in den Spikelöchern positioniert, erst anschließend wird das Haftsystem aktiviert und dadurch der Spike chemisch und physikalisch in den Laufstreifen eingebunden. Derart eingebundene Spikes sind in der Lage, auch hohen äußeren Belastungen standzuhalten. Die Erfindung ermöglicht außerdem eine nachträgliche und optionale Bespikung von Reifen.

Um die chemische Haftung der in den Laufstreifen eingebrachten und mit dem Haftsystem beschichteten Spikes durch Ausheizen bzw. Aktivieren des Haftsystems zu bewirken, wird jeder einzelne Spike mit einer separaten Induktionsheizeinrichtung erhitzt. Dieses Verfahren eignet sich für Spikes mit einem metallischen Spikekörper.

Die Erfindung betrifft ferner eine Vorrichtung zur Aktivierung des Haftsystems von Spikes, welche nach dem erfindungsgemäßen Verfahren beschichtet und im Laufstreifen eines Fahrzeugluftreifens verankert worden sind.

Die erfindungsgemäße Vorrichtung, welche eine Aktivierung des Haftsystems der bereits im Laufstreifen eingesetzten Spikes durch Induktionsheizen ermöglicht, besteht aus zumindest einer auf einem Spike positionierbaren Induktionsheizeinrichtung. Es ist somit jeder Spike separat über eine bzw. die Induktionsheizeinrichtung zu erhitzen. Eine zweckmäßige und einfach Ausführungsvariante einer solchen Induktionsheizeinrichtung weist einen nicht metallischen Träger und eine an diesem Träger gehaltene Induktionsspule auf, wobei es von Vorteil ist, wenn die Induktionsspule zumindest zum Teil im Träger eingebettet ist.

Werden in dieser Vorrichtung mehrere Induktionsheizeinrichtungen in zumindest einem Spulenarray zusammengefasst, so können die Induktionsheizeinrichtungen bereits auf mehreren Spikes vorpositioniert werden. Es kann eine Sensoreinrichtung vorgesehen sein, mittels welcher durch Drehung des Reifens die Spikepositionen feststellbar sind, entsprechend gespeichert und in einem Rechner verarbeitet werden, sodass die Induktionsheizeinrichtungen automatisch entsprechend der Spikepositionen angeordnet werden.

Weitere Merkmale, Vorteile und Einzelheiten der Erfindung werden anhand der schematischen Zeichnung, die Ausführungsbeispiele darstellt, näher beschrieben. Dabei zeigen
Fig. 1 eine Draufsicht auf einen Abschnitt eines profilierten Laufstreifens eines Fahrzeugluftreifens mit unbespikten Spikelöchern,
Fig. 1a einen Schnitt entlang der Linie I-I der Fig. 1,
Fig. 2 den Laufstreifenabschnitt aus Fig. 1 mit eingesetzten Spikes,
Fig. 2a einen Schnitt entlang der Linie II-II der Fig. 2,
Fig. 3 ein Basiskonzept einer Tauchbeschichtungsanlage für Spikes,
Fig. 4 ein Basiskonzept einer Trommelbeschichtungsvorrichtung für Spikes,
Fig. 5a bis Fig. 5d unterschiedliche Ansichten einer Ausführungsvariante einer Induktionsheizeinrichtung,
Fig. 6 eine über einem Profilblock positionierte Induktionsheizeinrichtung und
Fig. 7a bis Fig. 7c unterschiedliche Ansichten einer mehrere Induktionsheizeinrichtungen aufweisenden Induktionsheizvorrichtung.

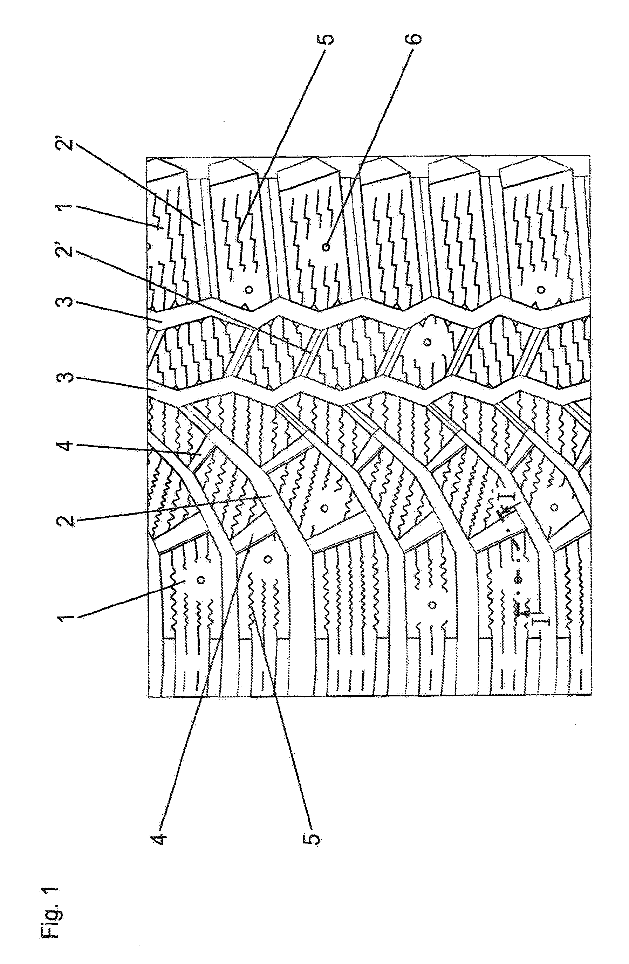

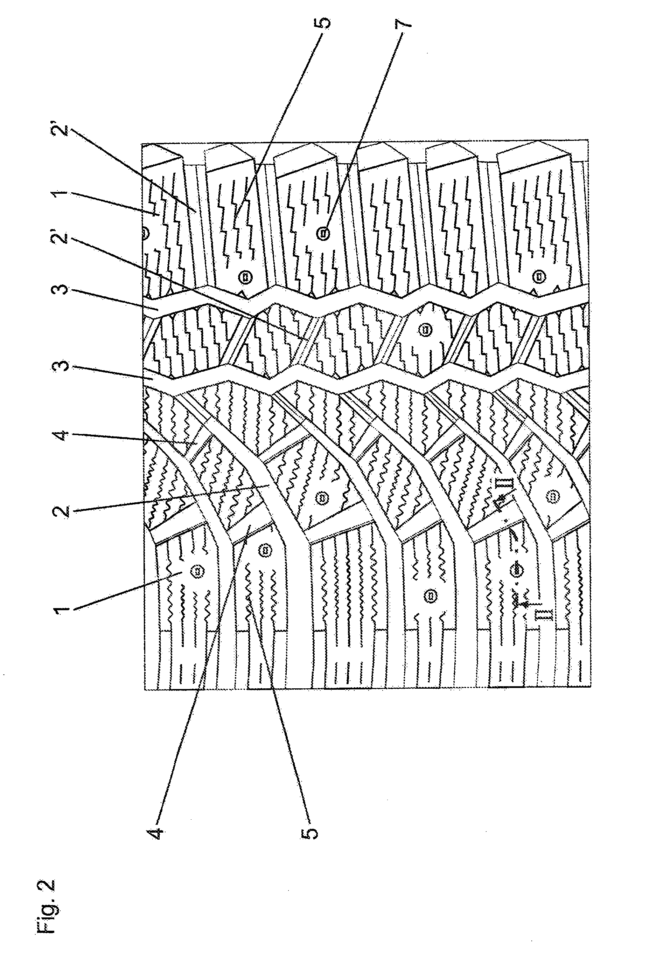

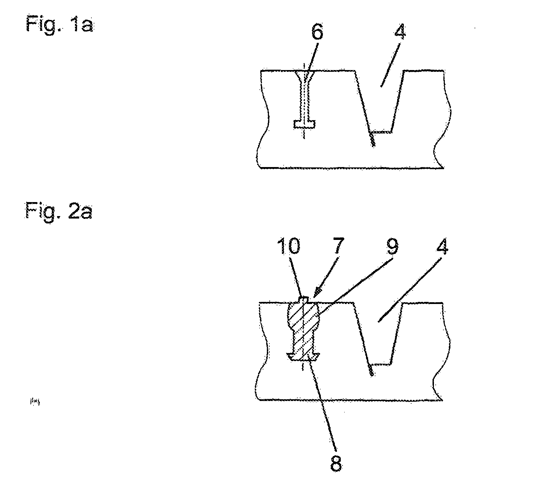

Fig. 1 und 2 zeigen einen profilierten Laufstreifen eines für Personenkraftwagen vorgesehenen Fahrzeugluftreifens, welcher für einen Einsatz unter winterlichen Fahrbedingungen, insbesondere auf Schnee oder Eis, besonders geeignet ist. Der Laufstreifen besteht aus einer Vielzahl von Profilblöcken 1, welche, in Reihen angeordnet, über den Umfang des Reifens verlaufen, wobei Quernuten 2, 2', Umfangsnuten 3 und Schrägrillen 4 die einzelnen Profilblöcke 1 begrenzen bzw. voneinander trennen. Der Verlauf der Nuten 2, 2', 3 und Rillen 4 bestimmt die in Draufsicht vorliegende unterschiedliche Gestalt der Profilblöcke 1. Wie bei Winterreifen üblich sind die Profilblöcke 1 jeweils mit einer Vielzahl von zumindest im Wesentlichen in Profilquerrichtung orientierten Einschnitten 5 versehen, die bei der gezeigten Ausführungsform in Draufsicht entweder einem wellenförmigen oder im Wesentlichen zick-zack-förmigen Verlauf aufweisen. Solche Einschnitte 5 weisen üblicherweise eine Breite zwischen 0,3 mm und 0,6 mm auf und unterstützen die Griff- Brems- und Traktionseigenschaften des Reifens auf Schnee und Eis. Nachdem die Ausgestaltung des Laufstreifens nicht Gegenstand dieser Erfindung ist, wird auf sie im Detail nicht näher eingegangen.

In einer Anzahl von Profilblöcken 1, insbesondere in weiter laufstreifenaußenseitig positionierten Profilblöcken 1, sind Spikelöcher 6 vorhanden, welche bei der Vulkanisation des Rohreifens in einer Vulkanisationsform durch entsprechend vorgeformte Formvorsprünge ausgebildet werden. Die im Laufstreifen ausgebildeten Spikelöcher 6 weisen im radialen Schnitt gemäß Fig. 1a einen Basisabschnitt 6a, einen zentralen, insbesondere kreiszylindrisch und sich in radialer Richtung sich erstreckenden zentralen Abschnitt 6b und einen an der Profiloberseite mündenden Abschnitt 6c, welcher zur Laufstreifenoberfläche zu breiter wird, auf. Die Ausführung der Spikelöcher 6 ist an sich bekannt und nicht Gegenstand der Erfindung.

Fig. 2 zeigt eine Draufsicht auf den Laufstreifenabschnitt mit eingesetzten Spikes 7, Fig. 2a einen Querschnitt mit einem in einem Spikeloch 6 positionierten Spike 7.

Die Spikes 7 weisen einen Basisteil 8 auf, auf welchem ein insbesondere im Wesentlichen kreiszylindrischer Spikekörper 9 sitzt. Im Spikekörper 9 ist der ebenfalls zylindrische, jedoch mit einem kleineren Durchmesser als der Spikekörper 9 versehene Pin 10 verankert. Der Basisteil 8 kann in Draufsicht kreisrund oder oval bzw. länglich ausgeführt sein, wobei ovale bzw. längliche Basisteile üblicherweise in Bezug auf die Umfangsrichtung des Laufstreifens im fertigen Reifen derart verankert werden, dass die Längserstreckung des Basisteils 8 mit der Umfangsrichtung des Reifens übereinstimmt. Zumindest die Basisteile 8 und die Spikekörper 9 der Spikes 7 werden mit einem Haftsystem, bei metallischen Spikes mit einem Gummi-Metall-Haftsystem, versehen bzw. beschichtet, wobei das Haftsystem nach dem Einsetzen der Spikes 7 in den Laufstreifen durch eine gesonderte Wärmebehandlung aktiviert wird. Es kann eines der bekannten Haftsysteme, bei Gummi-Metall-Haftsystemen beispielsweise Parlock, Chemlock oder Chemosil, verwendet werden. Die Beschichtung der Spikes 7 erfolgt im Anschluss an eine mechanische oder chemische Reinigung, wobei die Dicke der am Spike 7 befindlichen, trockenen Haftsystemschicht zwischen 2 µm und 60 µm beträgt.

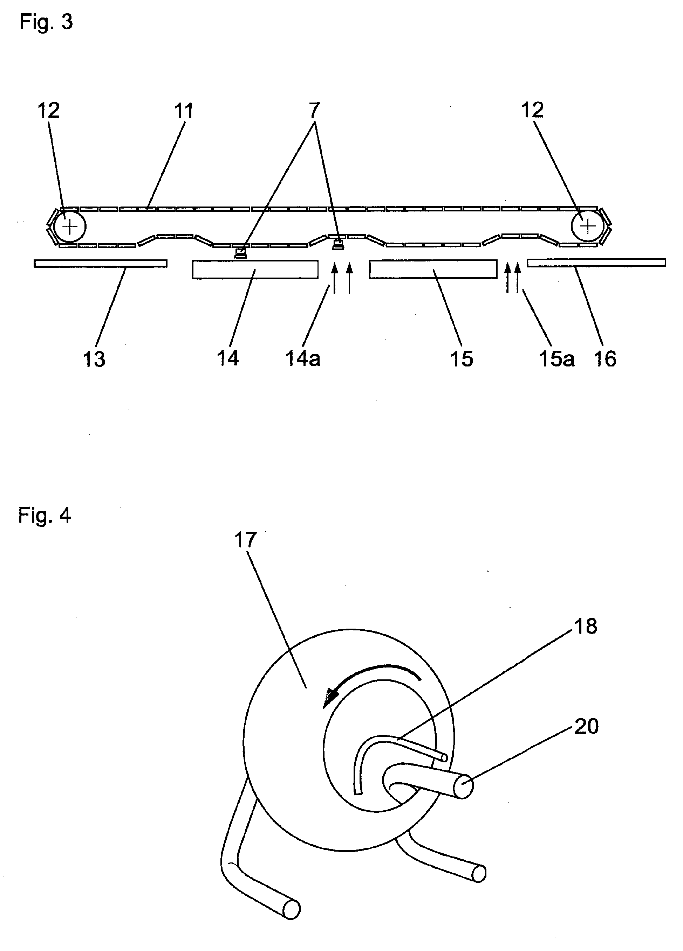

Fig. 3 zeigt das Grundprinzip einer Tauchbeschichtungsanlage von Spikes 7, welche eine automatisierte Beschichtung der Spikes 7 ermöglicht. Die Anlage weist ein an Rollen 12 endlos angeordnetes Transportband bzw. eine endlos angeordnete Transportkette 11 auf. Zumindest eine der Rollen 12 ist motorisch in Drehbewegung versetzbar. An einer Aufnahmestation 13 erfolgt eine Aufnahme der Spikes 7, sodass diese mit ihren Pins 10 an der Transportkette 11 aufgehängt sind. Spikes 7 mit einem Spikekörper 9 aus Aluminium, Kunststoff oder Keramik, können mittels ihrer metallischen Spikepins 10 magnetisch aufgenommen werden. Die an der Transportkette 11 gehaltenen Spikes 7 durchlaufen eine erste Tauchstation 14, in welcher die Spikes 7 mit einem flüssigen Primer behandelt werden. Dabei werden zumindest die Basisteile 8 und die Spikekörper 9 eingetaucht. Nach Verlassen der ersten Tauchstation 14 werden die Spikes 7 in einem warmen Luftstrom 14a getrocknet. Anschließend durchlaufen die Spikes 7 eine zweite Tauchstation 15, in welcher zumindest auf die Basisteile 8 und die Spikekörper 9 das in Lösung befindliche flüssige Haftsystem aufgebracht wird. Nach dem Verlassen der zweiten Tauchstation 15 erfolgt ein zweiter Trocknungsvorgang, insbesondere in einem warmen Luftstrom 15a. Die beschichteten Spikes 7 werden der Transportkette 11 bei einer Entnahmestation 16 entnommen.

Eine weitere Möglichkeit, die Spikes 7 mit einem Haftsystem zu beschichten, zeigt Fig. 4. Die dargestellte Trommelbeschichtungsvorrichtung weist eine in eine Dreh- oder Rüttelbewegung versetzbare, auf einem Gestell 17a gelagerte Trommel 17 auf, in welcher die mechanisch oder chemisch vorgereinigten Spikes 7 quasi als Schüttgut eingebracht werden. Über eine Einfülleinrichtung 18, insbesondere einen Schlauch oder ein Rohr, wird zuerst ein Primer und anschließend das Haftsystem, beides in Lösung, eingebracht und aufgesprüht. Nach der Beschichtung werden etwaige Lösungsmittelreste durch Zufuhr von Warmluft, welche über eine Zuführung 20, ebenfalls ein Schlauch oder ein Rohr, eingeblasen wird, abgetrocknet. Die trockenen und beschichteten Spikes 7 werden der Trommel 17 entnommen.

Die beschichteten Spikes 7 werden in die Spikelöcher 6 des bereits in herkömmlicher Weise hergestellten, vulkanisierten und somit fertigen Reifens, ebenfalls auf herkömmliche Weise, eingebracht. Anschließend erfolgt eine Aktivierung des Haftsystems durch Erwärmung der Spikes 7 auf eine Temperatur zwischen 90 °C und 180 °C für einen kurzen Zeitraum zwischen einer Sekunde und mehreren Sekunden.

Gemäß der Erfindung wird das auf die Spikes 7 aufgebrachte Haftsystem durch Induktionsheizen aktiviert. Induktionsheizen basiert auf dem Prinzip der Energiezufuhr über elektromagnetische Induktion, wobei eine Spule von passenden Abmessungen in die Nähe der aufzuheizenden Metallteile gebracht wird. An diese Spule wird Wechselstrom mit mittlerer bis hoher Frequenz angelegt, sodass in den Metallteilen parasitäre Ströme entstehen, deren Intensität gesteuert werden kann. Die Heizung erfolgt ohne direkten Kontakt und wirkt nur auf die metallischen Teile, die bearbeitet werden sollen. Die Übertragung ist sehr effizient, da keine Wärme verloren geht.

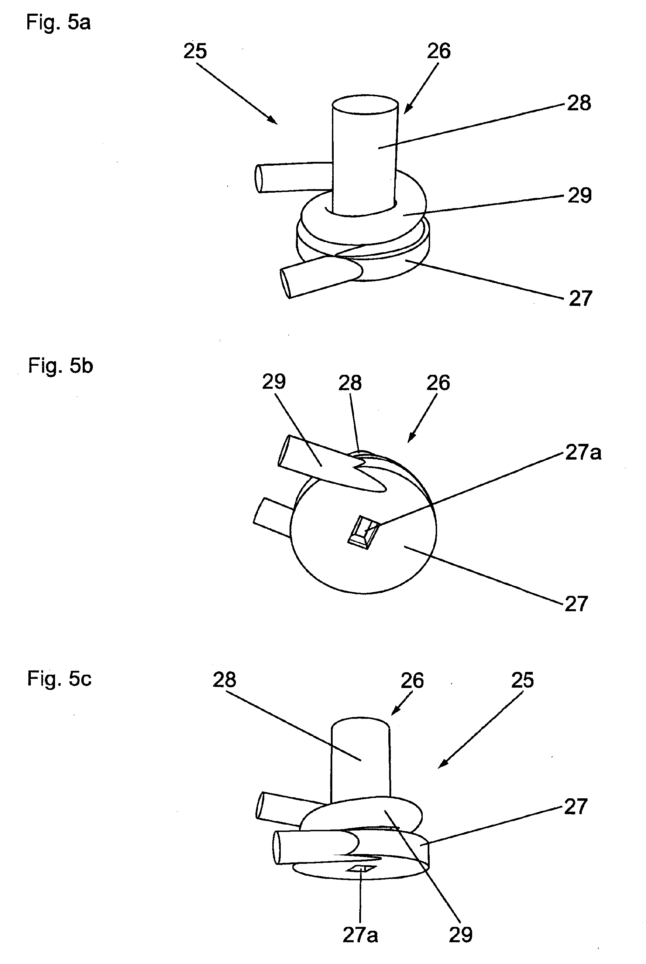

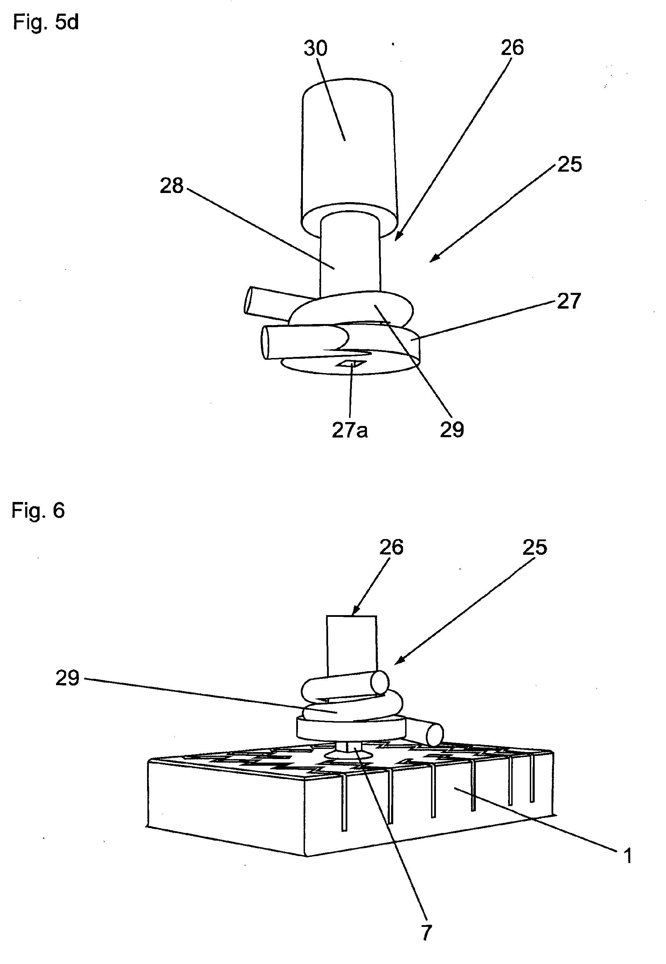

Fig. 5a bis Fig. 5c zeigen den grundsätzlichen Aufbau einer zum Beheizen eines einzelnen Spikes 7 geeigneten Induktionsheizeinrichtung 25. Diese weist einen Träger 26 auf, welcher aus einer Basisscheibe 27 und aus einer mit diesem verbundenen, zylindrischen Stütze 28 besteht. Der Träger 26 besteht aus einem nichtmetallischen, mechanisch festen Material, beispielsweise Keramik, PTFE oder PTS. Eine Induktionsspule 29 umläuft spiralförmig die Stütze 28, eines ihrer Enden ist im Basisteil 27 eingebettet. Die Basisscheibe 27 weist an ihrer Unterseite mittig eine Ausnehmung 27a auf, die ein Aufsetzen der Induktionsheizeinrichtung 25 auf den Pin 10 eines bereits im Laufstreifen positionierten Spikes 7 gestattet. Die Hochfrequenzzufuhr erfolgt bei aufgesetzter Induktionsheizeinrichtung 25 mittels nicht gezeigter flexibler elektrischer Leiter. Zusätzlich kann die Induktionsheizeinrichtung 25, wie es Fig. 5c zeigt, mittels eines Positionierelementes 30, welches auf die Stütze 28 aufgesetzt wird, auf einem Spike 7 positioniert werden, wobei der Träger 26 unter geringem Anpressdruck gegen den Reifen gedrückt wird. Fig. 6 zeigt die Induktionsheizeinrichtung 25 in ihrer an einer Spikeposition in einem Profilblock 1 positionierten Lage.

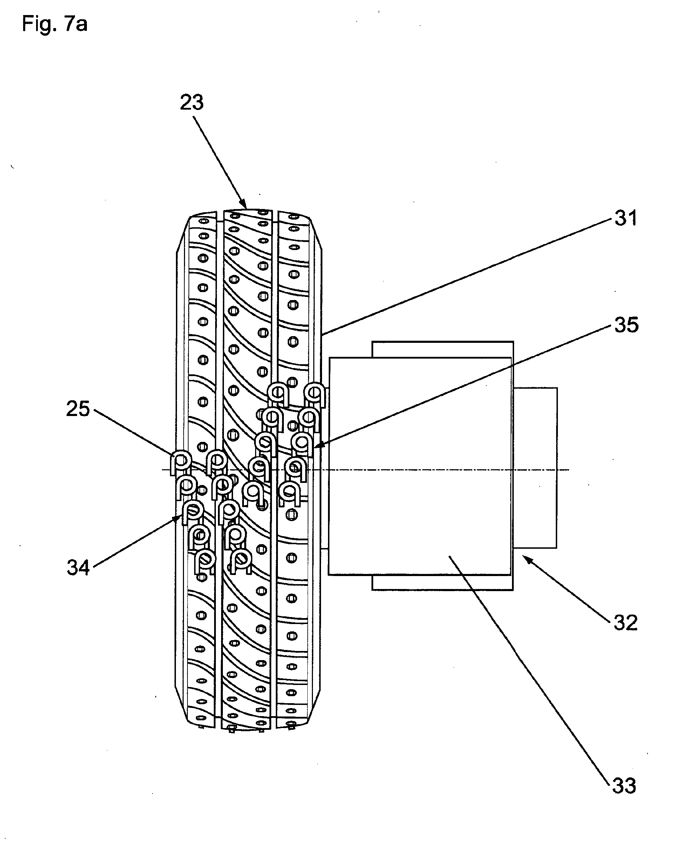

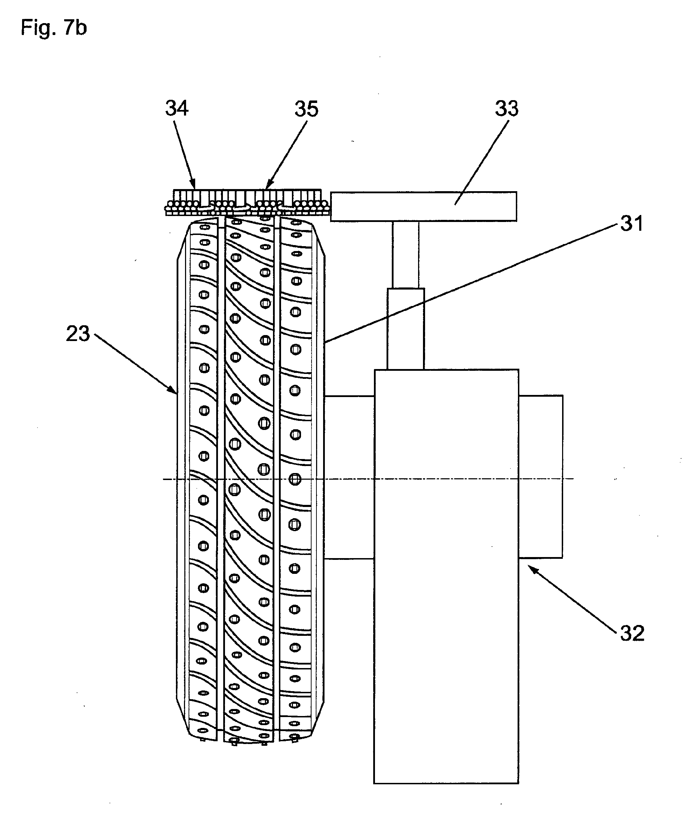

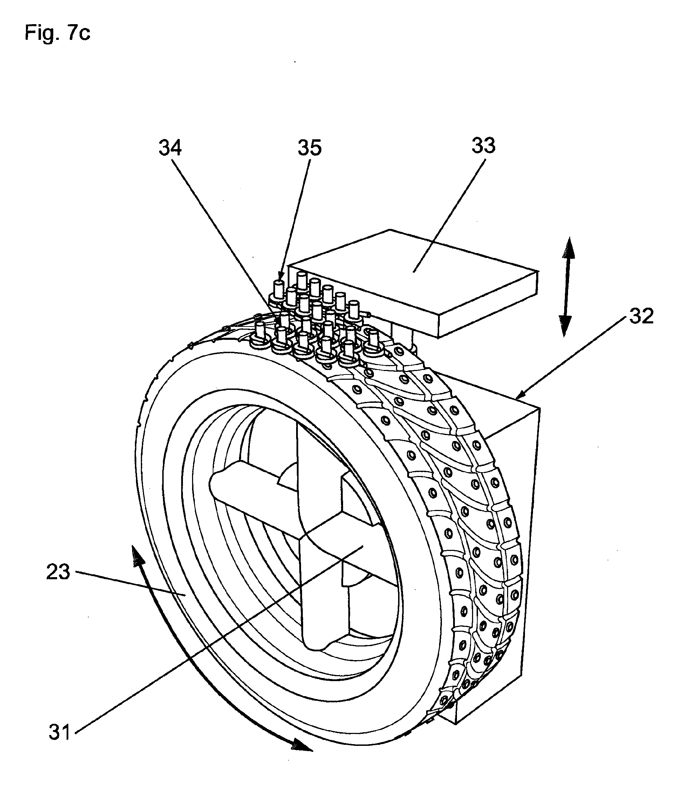

Fig. 7a bis Fig. 7c zeigen schematisch eine Vorrichtung, die ein gleichzeitiges Positionieren mehrerer Induktionsheizeinrichtungen 25 an den Spikepositionen im Laufstreifen eines Reifens 23 ermöglicht. Eine Positionierung jeder einzelnen Induktionsheizeinrichtung 25ist wegen der randomisierten Positionierung der Spikes 7 im Laufstreifen des Reifen erforderlich. Der Reifen 23 befindet sich auf einer Felge 31, die an einer motorisch betätigbaren Halterung 32 gelagert ist, sodass eine abschnittsweise Drehung des Reifens 23 erfolgen kann. An der Halterung 32 ist eine bezogen auf den Reifen zumindest in radialer Richtung verschiebbare und positionierbare Trägerplattform 33 angeordnet, auf welcher zwei Spulenarrays 34 und 35 voneinander unabhängig bewegbar gelagert sind. Die beiden Spulenarrays 34 und 35 umfassen jeweils eine Anzahl von entsprechend der Positionen der Spikes 7 im Laufstreifen ausgerichteten Induktionsheizeinrichtungen 25, sodass diese auf den Spikes 7 exakt positioniert werden können. Nach der Aktivierung der Haftsysteme werden die Spulenarrays 34, 35 angehoben, der Reifen 23 ein Stück gedreht und die Spulenarrays 34, 35 auf den nächsten Spikes 7 positioniert. Eine Sensorzeile 36 mit Hallsensoren kann vorab die Spikepositionen während einer Radumdrehung ermitteln, sodass die Positionierung der Spulenarrays 34, 35 entsprechend gesteuert werden kann. Eine derartige Vorrichtung kann auch mehr als zwei Spulenarrays aufweisen.

Es sind weitere Verfahren möglich, das Haftsystem der Spikes zu aktivieren, beispielweise durch äußeres Erwärmen des Reifens in einem Umluftofen oder einem Mikrowellenofen, Erwärmung mit Infrarotstrahlung, Heißluft, Heißwasser, Heißdampf, durch Ultraschall, Laser oder Hochfrequenz.

Dem Haftsystem kann ein Fluoreszenzmittel zugesetzt werden, welches bei einer äußeren Bestrahlung mit UV-Licht einer Wellenlänge von beispielsweise 200 nm bis 400 nm leuchtet. Dadurch wird eine nachträgliche Inspektion der bespikten Reifen ermöglicht. Je nach Fluoreszenzmittel kann auch die Farbe des fluoreszierenden Lichts variiert werden. Die Spikes können daher auf diese Weise markiert sein und es können beispielsweise unterschiedlich beschichtete Spikes oder unterschiedlich aufgebaute Spikes voneinander unterschieden werden.

### Bezugszeichenliste

- 1: Profilblock
- 2: Quernut
- 2': Quernut
- 3: Umfangsnut
- 4: Schrägrille
- 5: Einschnitt
- 6: Spikeloch
- 6a: Basisabschnitt
- 6b: zentraler Abschnitt
- 6c: oberer Abschnitt
- 7: Spike
- 8: Basisteil
- 9: Spikekörper
- 10: Pin
- 11: Transportkette
- 12: Rolle
- 13: Aufnahmestation
- 14: Erste Tauchstation
- 14a: Luftstrom
- 15: Zweite Tauchstation
- 15a: Luftstrom
- 16: Entnahmestation
- 17: Trommel
- 17a: Gestell
- 18: Einfüllöffnung
- 19: Felge
- 20: Einfüllöffnung
- 25: Induktionsheizeinrichtung
- 26: Träger
- 27: Basisscheibe
- 27a: Ausnehmung
- 28: Stütze
- 29: Spule
- 30: Positionierelement
- 31: Felge
- 32: Halterung
- 33: Träger
- 34: Spulenarray
- 35: Spulenarray
- 36: Sensorzeile

## Patentansprüche

1. Verfahren zum Verankern von Spikes (7) in einem Laufstreifen eines Fahrzeugluftreifens, wobei die Spikes (7) jeweils einen Basisteil (8), einen Spikekörper (9) und einen Pin (10) aufweisen und in Spikelöcher (6) im Laufstreifen eingebracht werden, welche bei der Vulkanisation des Reifens in einer Heizpresse eingeformt worden sind, wobei die Spikes (7) vor dem Einbringen in den Laufstreifen mit einem Haftsystem beschichtet werden und unter Pressung des Gummimaterials in die Spikelöcher (6) eingebracht werden, wobei anschließend das Haftsystem bei in den Spikelöchern (6) positionierten Spikes (7) durch Wärme aktiviert wird, sodass eine Haftverbindung der Spikes (7) zum Gummimaterial des Laufstreifens hergestellt wird,
**dadurch gekennzeichnet,**
**dass** das auf die Spikes (7) aufgebrachte Haftsystem durch Induktionsheizen der Spikes (7) aktiviert wird, wobei jeder Spike (7) mit einer separaten Induktionsheizeinrichtung (25) erhitzt wird.

2. Vonichtung zur Aktivierung des Haftsystems von Spikes (7) gemäß dem Verfahren nach Anspruch 1,
**dadurch gekennzeichnet,**
**dass** sie zumindest eine auf einem Spike (7) positionierbare Induktionsheizeinrichtung (25) aufweist.

3. Vorrichtung nach Anspruch 2, **dadurch gekennzeichnet, dass** die Induktionsheizeinrichtung (25) einen nicht metallischen Träger (26) und eine an diesem gehaltene Induktionsspule (29) aufweist.

4. Vorrichtung nach Anspruch 3, **dadurch gekennzeichnet, dass** die Induktionsspule (29) zum Teil im Träger (26) eingebettet ist.

5. Vorrichtung nach einem der Ansprüche 2 bis 4, **dadurch gekennzeichnet, dass** mehrere Induktionsheizeinrichtungen (25) in zumindest einem Spulenarray (34, 35) zusammengefasst sind und gemäß der Anordnung einer entsprechenden Anzahl von Spikes (7) vorpositionierbar sind.

6. Vorrichtung nach Anspruch 5, **dadurch gekennzeichnet, dass** das/die Spulenarray(s) (34, 35) an einem verfahrbaren Träger (33) gelagert ist bzw. sind, welcher an einer Halterung angeordnet ist.

## Claims

1. Method for anchoring spikes (7) in a tread of a pneumatic vehicle tyre, wherein the spikes (7) in each case have a base part (8), a spike body (9) and a pin (10) and are inserted into spike holes (6) in the tread that have been made during the vulcanization of the tyre in a heating press, wherein the spikes (7) are coated with an adhesive system before being inserted into the tread and are inserted into the spike holes (6) while the rubber material undergoes pressing, wherein, with the spikes (7) positioned in the spike holes (6), the adhesive system is subsequently activated by heat such that an adhesive bond of the spikes (7) to the rubber material of the tread is established, **characterized in that** the adhesive system applied to the spikes (7) is activated by induction heating of the spikes (7), each spike (7) being heated by a separate induction heating device (25).

2. Apparatus for activating the adhesive system of spikes (7) by the method according to Claim 1, **characterized in that** it has at least one induction heating device (25) that can be positioned on a spike (7).

3. Apparatus according to Claim 2, **characterized in that** the induction heating device (25) has a nonmetallic support (26) and an induction coil (29) held thereon.

4. Apparatus according to Claim 3, **characterized in that** the induction coil (29) is partly embedded in the support (26).

5. Apparatus according to one of Claims 2 to 4, **characterized in that** a number of induction heating devices (25) are combined in at least one coil array (34, 35) and can be pre-positioned according to the arrangement of a corresponding number of spikes (7).

6. Apparatus according to Claim 5, **characterized in that** the coil array(s) (34, 35) is or are mounted on a movable support (33), which is arranged on a mount.

## Revendications

1. Procédé d'ancrage de clous (7) dans la bande de roulement d'un bandage pneumatique pour roue de véhicule, les clous (7) présentant chacun une partie de base (8), un corps de clou (9) et une pointe (10) et étant placés dans des trous (6) pour clou prévus dans la bande de roulement et formés lors de la vulcanisation du bandage de roue dans une presse chauffée,
les clous (7) étant revêtus par un système d'adhérence avant d'être placés dans la bande de roulement et étant placés dans les trous (6) pour clou en comprimant le matériau de caoutchouc,
le système d'adhérence étant ensuite activé thermiquement dans les clous (7) placés dans les trous (6) pour clou de manière à établir une liaison adhésive entre les clous (7) et le matériau de caoutchouc de la bande de roulement,
**caractérisé en ce que**
le système d'adhérence appliqué sur les clous (7) est activé par chauffage des clous (7) par induction, chaque clou (7) étant chauffé par un dispositif séparé (25) de chauffage par induction.

2. Dispositif d'activation du système d'adhérence de clous (7) dans le procédé selon la revendication 1, **caractérisé en ce qu'**il présente au moins un dispositif (25) de chauffage par induction apte à être placé sur un clou (7).

3. Dispositif selon la revendication 2, **caractérisé en ce que** le dispositif (25) de chauffage par induction présente un support non métallique (26) et une bobine d'induction (29) maintenue sur ce dernier.

4. Dispositif selon la revendication 3, **caractérisé en ce que** la bobine d'induction (29) est incorporée en partie dans le support (26).

5. Dispositif selon l'une des revendications 2 à 4, **caractérisé en ce que** plusieurs dispositifs (25) de chauffage par induction sont rassemblés en au moins une batterie (34, 35) de bobines et peuvent être pré-positionnés selon l'agencement d'un nombre correspondant de clous (7).

6. Dispositif selon la revendication 5, **caractérisé en ce que** la ou les batteries de bobines (34, 35) sont montées dans un support (33) déplaçable disposé sur un dispositif de maintien.
